# EUROPEAN PATENT APPLICATION

(11) **EP 3 301 529 A1**
(43) Date of publication of application: **04.04.2018**
(21) Application number: 17184290.9
(22) Date of filing: 01.08.2017
(51) Int. Cl.: G05B 23/02

(54) **METHOD AND APPARATUS FOR DISPLAYING MONITORING INFORMATION**

(30) Priority: 29.09.2016 CN 201610868584
(71) Applicant: Siemens Aktiengesellschaft, 80333 München (DE)
(72) Inventor: LI, Zhi Hao, Beijing, Beijing 100084 (CN); YANG, Chen, Beijing, Beijing 100102 (CN); ZHANG, Yi Chi, Beijing, Beijing 100102 (CN)
(74) Representative: Isarpatent

(57) **Abstract**

Embodiments of the present invention provide a method and apparatus for displaying monitoring information. The monitoring information is used for analysing a fault which has occurred in a production process. The method comprises: receiving a first input of a user on a first page of a first display area, wherein the first page is used to display an operating state of at least one sub-process associated with the fault in the production process; determining an object selected by the first input on the first page; acquiring pre-stored monitoring information corresponding to the object, wherein the monitoring information is used to indicate an operating state of the object in the production process; displaying the monitoring information to the user on a second display area. Clearly, by determining an object selected by a user input on a page associated with a fault, in order to display monitoring information associated with the object to the user, with no need for the user to view a large number of pages according to personal experience in order to acquire such information, the fault analysis time can be reduced, and the efficiency of fault analysis can be increased.

## Description

### Technical field

The present invention relates to the technical field of production process control, in particular to a method and apparatus for displaying monitoring information, wherein the monitoring information is used to analyse a fault which has occurred in a production process.

### Background art

Computer-based process control systems are already widely used in many different industrial production environments, such as chemical industry processes and power generation processes. Such a process control systems is generally located in a central control room, and can provide various types of information associated with a production process to management personnel. For example, a process control system can display these items of information to management personnel by means of at least one user interface, enabling the management personnel to monitor, and subject to fault analysis, the production process and equipment used therein etc. in a visually direct way.

Such a method of providing visual information can effectively enhance management control of a production process; however, due to reasons such as the complexity of the production process (for example, a very large amount of equipment might be involved in the process), a process control system must often provide the items of information to management personnel through a large number of visual pages. The difficulty management personnel will experience when trying to rapidly locate the cause of a fault will increase accordingly. When a fault occurs in a production process, management personnel must view a large number of visual pages which might be relevant to the fault in order to locate the cause of the fault, according to personal experience. This often requires a lot of time, so the efficiency of fault analysis is greatly reduced.

### Content of the invention

In view of the abovementioned problem in the prior art, an embodiment of the present invention provides a method and apparatus for displaying monitoring information. This enables the fault analysis time to be shortened, and the efficiency with which a user can analyse faults to be increased.

One aspect is a method for displaying monitoring information according to an embodiment of the present invention, wherein the monitoring information is used to analyse a fault which has occurred in a production process, the method comprising: receiving a first input of a user on a first page of a first display area, wherein the first page is used to display an operating state of at least one sub-process associated with the fault in the production process; determining an object selected by the first input on the first page; acquiring pre-stored monitoring information corresponding to the object, wherein the monitoring information is used to indicate an operating state of the object in the production process; displaying the monitoring information to the user on a second display area.

Clearly, by determining an object selected by a user input on a page associated with a fault, in order to display monitoring information associated with the object to the user, with no need for the user to view a large number of pages according to personal experience in order to acquire such information, the fault analysis time can be reduced, and the efficiency of fault analysis can be increased.

In one embodiment, the object comprises a first region on the first page; the step of displaying the monitoring information to the user on the second display area further comprises: displaying a thumbnail of at least one second page to the user on the second display area; wherein the at least one second page is a pre-defined page which is associated with the fault and which is associated with at least one sub-process in the production process designated by the first region.

Clearly, in this embodiment, based on a region selected by the user input on a page on which a fault has occurred, a page associated with the fault of the region can be rapidly provided and displayed, with no need for the user to search for these pages according to personal experience, so the efficiency with which the user can analyse faults can be increased.

In another embodiment, the thumbnail of each second page is associated with a link, which points to the second page;
after displaying the thumbnail of at least one second page to the user on the second display area, the method further comprises: receiving a second input of the user on the second display area; determining one second page of the at least one second page selected by the second input on the second display area; displaying on the first display area the second page selected by the second input.

Clearly, in this embodiment, by determining a page selected in a thumbnail of at least one page by a user input in order to further display the page to the user, the user is enabled to flexibly view pages associated with a fault, hence the efficiency with which the user can analyse faults can be increased.

In another embodiment, the second input comprises: selecting one of the at least one second page on the second display area; dragging the selected second page from the second display area to the first display area. Clearly, such an input method is easy for a user to understand and operate, and can improve the user experience.

In another embodiment, the object comprises a current value of an attribute of a component displayed on the first page;
the step of displaying the monitoring information to the user on the second display area further comprises: displaying to the user on the second display area a graph of variation of values of the attribute of the component within a preset time period preceding a current moment.

Clearly, in this embodiment, the user selects the current value of a particular attribute of a particular component on a page associated with a fault by means of an input, and can thereby rapidly view a graph of variation of values of that attribute within a particular time period. In this way, the process of the user acquiring such monitoring information can be greatly simplified, and hence the efficiency of fault analysis can be improved.

In another embodiment, the object comprises a component displayed on the first page;
the step of displaying the monitoring information to the user on the second display area further comprises: displaying a logic diagram of the component to the user on the second display area.

Clearly, in this embodiment, the user selects a component on a page associated with a fault by means of an input, and can thereby rapidly view a logic diagram of the component, with no need to search for such information according to personal experience, hence the efficiency with which the user can analyse faults can be improved.

In another embodiment, before receiving the first input, the method further comprises:
receiving a third input of the user on a third page of the first display area, wherein the third page is used to display an operating state of at least one sub-process associated with the fault in the production process;
determining a second region selected by the third input on the third page;
displaying a thumbnail of at least one fourth page to the user on the second display area, wherein the at least one fourth page is a pre-defined page which is associated with the fault and which is associated with at least one sub-process in the production process designated by the second region, and the at least one fourth page comprises the first page;
receiving a fourth input of the user on the second display area;
determining that the fourth input has selected the first page on the second display area; displaying the first page on the first display area.

Clearly, in this embodiment, first of all, on the basis of a region selected by a user input on a page associated with a fault, a thumbnail of at least one page associated with the region is provided; then, on the basis of a page selected by a user input in a thumbnail of at least one page, said page is displayed. Thus, the user can quickly acquire page information associated with a fault, hence the efficiency with which the user can analyse faults can be improved.

In another embodiment, the method further comprises: displaying a thumbnail of the third page on the second display area; wherein the thumbnail of the third page, the monitoring information, and the thumbnail of each page (other than the first page) of the at least one fourth page are displayed on the second display area in a manner of successive arrangement.

Clearly, in this embodiment, such a manner of display makes it easy for the user to view and understand, in a visually direct way, these items of information associated with the fault which were previously displayed, and hence make it convenient for the user to perform comprehensive analysis of these items of information, to improve the efficiency of fault analysis.

In another embodiment, the second region is marked on the thumbnail of the third page.

Clearly, in this embodiment, marking a region selected through input by the user on the thumbnail of a page makes it easy for the user to understand in a visually direct way which region of which page the currently displayed monitoring information is associated with, so as to further improve the efficiency of fault analysis.

In another embodiment, the third input comprises: selecting the second region on the third page on the first display area; dragging the selected second region from the first display area to the second display area;
the fourth input comprises: selecting the first page on the second display area; dragging the first page from the second display area to the first display area.

Clearly, in this embodiment, such an input method is easy for a user to understand and operate, and can improve the user experience.

In another embodiment, the first display area and the second display area are located on the same user interface, or located on different user interfaces.

Thus, a flexible manner of display can be provided according to user needs. In another embodiment, the first input comprises: selecting the object on the first page on the first display area; dragging the selected object from the first display area to the second display area.

Clearly, such an input method is easy for a user to understand and operate, and can improve the user experience.

In another embodiment, the first display area is larger than the second display area; and/or the first display area has a higher screen resolution than the second display area.

This can make it easy for the user to clearly view associated monitoring information in the first display area, in order to perform fault analysis. Another aspect is an apparatus for displaying monitoring information according to an embodiment of the present invention, wherein the monitoring information is used to analyse a fault which has occurred in a production process, the apparatus comprising: a receiving module, for receiving a first input of a user on a first page of a first display area, wherein the first page is used to display an operating state of at least one sub-process associated with the fault in the production process; a determining module, for determining an object selected by the first input on the first page; an acquiring module, for acquiring pre-stored monitoring information corresponding to the object, wherein the monitoring information is used to indicate an operating state of the object in the production process; a display module, for displaying the monitoring information to the user on a second display area.

Clearly, by determining an object selected by a user input on a page associated with a fault, in order to display monitoring information associated with the object to the user, with no need for the user to view a large number of pages according to personal experience in order to acquire such information, the fault analysis time can be reduced, and the efficiency of fault analysis can be increased.

In one embodiment, the object determined by the determining module comprises a first region on the first page;
the display module, when displaying the monitoring information to the user on the second display area, is specifically used for: displaying a thumbnail of at least one second page to the user on the second display area, wherein the at least one second page is a pre-defined page which is associated with the fault and which is associated with at least one sub-process in the production process designated by the first region.

Clearly, in this embodiment, based on a region selected by the user input on a page on which a fault has occurred, a page associated with the fault of the region can be rapidly provided and displayed, with no need for the user to search for these pages according to personal experience, so the efficiency with which the user can analyse faults can be increased.

In another embodiment, the thumbnail of each second page displayed by the display module is associated with a link, which points to the second page; the receiving module is further used for: after the thumbnail of at least one second page is displayed to the user on the second display area of the display module, receiving a second input of the user on the second display area; the determining module is further used for: determining one of the at least one second page selected by the second input on the second display area; the display module is further used for: displaying on the first display area the second page selected by the second input.

Clearly, in this embodiment, by determining a page selected in a thumbnail of at least one page by a user input in order to further display the page to the user, the user is enabled to flexibly view pages associated with a fault, hence the efficiency with which the user can analyse faults can be increased.

In another embodiment, the receiving module, when receiving the second input, is specifically used for receiving the following operations performed by the user: selecting one of the at least one second page on the second display area; dragging the selected second page from the second display area to the first display area.

Clearly, such an input method is easy for a user to understand and operate, and can improve the user experience.

In another embodiment, the object determined by the determining module comprises a current value of an attribute of a component displayed on the first page;
the display module, when displaying the monitoring information to the user on the second display area, is specifically used for: displaying to the user on the second display area a graph of variation of values of the attribute of the component within a preset time period preceding a current moment.

Clearly, in this embodiment, the user selects the current value of a particular attribute of a particular component on a page associated with a fault by means of an input, and can thereby rapidly view a graph of variation of values of that attribute within a particular time period. In this way, the process of the user acquiring such monitoring information can be greatly simplified, and hence the efficiency of fault analysis can be improved.

In another embodiment, the object determined by the determining module comprises a component displayed on the first page;
the display module, when displaying the monitoring information to the user on the second display area, is specifically used for: displaying a logic diagram of the component to the user on the second display area.

Clearly, in this embodiment, the user selects a component on a page associated with a fault by means of an input, and can thereby rapidly view a logic diagram of the component, with no need to search for such information according to personal experience, hence the efficiency with which the user can analyse faults can be improved.

In another embodiment, the receiving module is further used for: before receiving the first input, receiving a third input of the user on a third page of the first display area, wherein the third page is used to display an operating state of at least one sub-process associated with the fault in the production process; the determining module is further used for: determining a second region selected by the third input on the third page; the display module is further used for: displaying a thumbnail of at least one fourth page to the user on the second display area, wherein the at least one fourth page is a pre-defined page which is associated with the fault and which is associated with at least one sub-process in the production process designated by the second region; the receiving module is further used for: receiving a fourth input of the user on the second display area; the determining module is further used for: determining that the fourth input has selected the first page on the second display area; the display module is further used for: displaying the first page on the first display area.

Clearly, in this embodiment, first of all, on the basis of a region selected by a user input on a page associated with a fault, a thumbnail of at least one page associated with the region is provided; then, on the basis of a page selected by a user input in a thumbnail of at least one page, said page is displayed. Thus, the user can quickly acquire page information associated with a fault, hence the efficiency with which the user can analyse faults can be improved.

In another embodiment, the display module is further used for: displaying a thumbnail of the third page on the second display area, wherein the thumbnail of the third page, the monitoring information, and the thumbnail of each page (other than the first page) of the at least one fourth page are displayed on the second display area in a manner of successive arrangement.

Clearly, in this embodiment, such a manner of display makes it easy for the user to view and understand, in a visually direct way, these items of information associated with the fault which were previously displayed, and hence make it convenient for the user to perform comprehensive analysis of these items of information, to improve the efficiency of fault analysis.

In another embodiment, the second region determined by the determining module is marked on the thumbnail of the third page.

Clearly, in this embodiment, marking a region selected through input by the user on the thumbnail of a page makes it easy for the user to understand in a visually direct way which region of which page the currently displayed monitoring information is associated with, so as to further improve the efficiency of fault analysis.

In another embodiment, the receiving module, when receiving the third input, is specifically used for receiving the following operations performed by the user: selecting the second region on the third page on the first display area; dragging the selected second region from the first display area to the second display area;
the receiving module, when receiving the fourth input, is specifically used for receiving the following operations performed by the user: selecting the first page on the second display area; dragging the first page from the second display area to the first display area.

Clearly, in this embodiment, such an input method is easy for a user to understand and operate, and can improve the user experience.

In another embodiment, the first display area used by the display module and the second display area used by the display module are located on the same user interface, or located on different user interfaces.

Thus, a flexible manner of display can be provided according to user needs. In another embodiment, the receiving module, when receiving the first input, is specifically used for receiving the following operations performed by the user: selecting the object on the first page on the first display area; dragging the selected object from the first display area to the second display area.

Clearly, such an input method is easy for a user to understand and operate, and can improve the user experience.

In another embodiment, the first display area used by the display module is larger than the second display area used by the display module; and/or the first display area used by the display module has a higher screen resolution than the second display area used by the display module.

This can make it easy for the user to clearly view associated monitoring information in the first display area, in order to perform fault analysis. Another aspect is an apparatus for displaying monitoring information according to an embodiment of the present invention. The monitoring information is used for analysing a fault which has occurred in a production process. The apparatus comprises: at least one processor; at least one user interface coupled to the at least one processor; a display coupled to the at least one processor;
wherein the at least one processor is used for: receiving, through the at least one user interface, a first input of a user on a first page of a first display area of the display, wherein the first page is used to display an operating state of at least one sub-process associated with the fault in the production process; determining an object selected by the first input on the first page; acquiring pre-stored monitoring information corresponding to the object, wherein the monitoring information is used to indicate an operating state of the object in the production process; displaying the monitoring information to the user via a second display area of the display.

Clearly, by determining an object selected by a user input on a page associated with a fault, in order to display monitoring information associated with the object to the user, with no need for the user to view a large number of pages according to personal experience in order to acquire such information, the fault analysis time can be reduced, and the efficiency of fault analysis can be increased.

In another embodiment, the at least one processor is further used for combining with the at least one user interface and the display to execute the methods of the embodiments above.

Another aspect is a computer-readable medium according to an embodiment of the present invention, comprising code which causes a computer to execute the methods of the embodiments above.

Clearly, by determining an object selected by a user input on a page associated with a fault, in order to display monitoring information associated with the object to the user, with no need for the user to view a large number of pages according to personal experience in order to acquire such information, the fault analysis time can be reduced, and the efficiency of fault analysis can be increased.

### Description of the accompanying drawings

Other features, characteristics, advantages and benefits of the present invention will become more obvious through the following detailed description which makes reference to the accompanying drawings.
Fig. 1 is a schematic diagram of an example of a scenario in which an embodiment of the present invention may be applied.
Fig. 2 is a flow chart of a method for displaying monitoring information according to an embodiment of the present invention.
Figs. 3A - 3D together show an example of display layout according to an embodiment of the present invention.
Figs. 4A - 4C together show an example of display layout according to another embodiment of the present invention.
Fig. 5 is a flow chart of a method for displaying monitoring information according to an embodiment of the present invention.
Fig. 6 is a flow chart of a method for displaying monitoring information according to another embodiment of the present invention.
Fig. 7 is an example of monitoring information display layout according to an embodiment of the present invention.
Fig. 8 is a schematic diagram of an apparatus for displaying monitoring information according to an embodiment of the present invention.
Fig. 9 is a schematic diagram of an apparatus for displaying monitoring information according to another embodiment of the present invention.

**List of labels used in the drawings:**

| | | | |
|---|---|---|---|
| 110: | process control system | 120: | display |
| 130: | component | 210 : | receive first input of user |
| 220: | determine object selected by first input | | |
| 230: | acquire monitoring information corresponding to object | | |
| 240: | display monitoring information to user | | |
| 310: | first display area | | |
| 3100: | first page | 3101: | first region |
| 320: | second display area | 3200: | second page |
| 3102: | component | 3201: | graph of variation |
| 3202: | logic diagram | 4100: | third page |
| 4101: | second region | 3100-1: | fourth page |
| 501: | receive first input | | |
| 502: | determine that first input has selected first region | | |
| 503: | determine that first input has selected current value of attribute | | |
| 504: | determine that first input has selected component | | |
| 505: | acquire second page | | |
| 506: | display thumbnail of second page | | |
| 507: | receive second input | | |
| 508: | determine that second input has selected second page | | |
| 509: | display second page selected by second input | | |
| 510: | acquire graph of variation | | |
| 511: | display graph of variation | | |
| 512: | acquire logic diagram | 513: | display logic diagram |
| 601: | receive third input | | |
| 602: | determine that third input has selected second region | | |
| 603: | display thumbnail of fourth page | | |
| 604: | receive fourth input | | |
| 605: | determine that fourth input has selected first page | | |
| 606: | display first page | 607: | receive first input |
| 608: | determine that first input has selected current value of attribute | | |
| 609: | acquire graph of variation | | |
| 610: | display graph of variation | | |
| 611: | determine that first input has selected component | | |
| 612: | acquire logic diagram | | |
| 613: | display logic diagram | 7100: | page |
| 7201: | valve logic diagram | | |
| 7202: | graph of temperature variation | | |
| 810: | receiving module | 820: | determining module |
| 830: | acquiring module | 840: | display module |
| 910: | processor | 920: | user interface |
| 9201: | touch screen | 9202: | mouse keyboard |
| 930: | display | 940: | memory |

### Particular embodiments

At present, in the industrial production field, process control systems are generally used to manage production processes. A process control system can provide a visual page by means of a user interface; such a visual page can present various types of specific information associated with a production process to management personnel, such as an operating state of a particular sub-process in the production process, or an operating state of a particular component, thereby helping the management personnel to monitor the production process in a visually direct way.
However, due to reasons such as production process complexity, when a fault occurs in a production process, the number of visual pages which might be involved in the fault might be very large, and this might prevent management personnel from rapidly locating the cause of the fault. Management personnel must view a large number of pages according to personal experience to acquire detailed information associated with the fault, in order to locate the cause of the fault. Such a process often takes a lot of time, so the efficiency of fault analysis is greatly reduced.
In response to this, an embodiment of the present invention provides a solution for displaying monitoring information, wherein the monitoring information may be used to analyse a fault which has occurred in a production process. In summary, in an embodiment of the present invention, a first input of a user on a first page of a first display area is detected, wherein the first page may be used to display an operating state of at least one sub-process associated with a fault in a production process. An object selected by the first input on the first page may be determined. Pre-stored monitoring information corresponding to the object may then be acquired, wherein the monitoring information may be used to indicate an operating state of the object in the production process. The monitoring information may then be displayed to the user on a second display area. Clearly, in the technical solution provided in an embodiment of the present invention, when a fault occurs in a production process, based on an object which a user wishes to analyse further and which is selected by a user input on a page associated with a fault, monitoring information associated with the object and used to perform fault analysis can be displayed to the user quickly, with no need for the user to search for such information according to personal experience, hence the fault analysis time can be shortened, and the efficiency with which the user can analyse faults can be improved.

Various embodiments of the present invention are described in detail below with reference to the accompanying drawings.

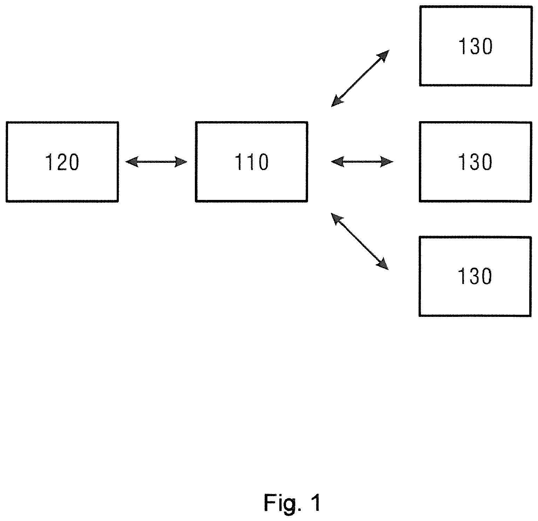

Fig. 1 is a schematic diagram of an example of a scenario in which an embodiment of the present invention may be applied. It should be understood that the example of fig. 1 is merely intended to help those skilled in the art to better understand embodiments of the present invention, not to limit the scope of embodiments of the present invention.
In the example of fig. 1, a process control system 110, a display 120 and components 130 involved in a production process are shown. It should be understood that the quantity of the display and components shown in fig. 1 are merely demonstrative; the quantity of display(s) and component(s) may be varied according to actual requirements. Embodiments of the present invention are not restricted in this respect.
As stated above, the process control system 110 may be used to monitor the production process, and provide various types of information associated with the production process, etc. The display 120 may be used to display a user interface, so as to provide visual information to a user. The components 130 may be devices capable of executing production functions in a production environment. For example, when the example of fig. 1 is applied to a power generation production environment, the components 130 may include valves, pumps, sensors, bearings, etc.
Specifically, the process control system 110 may be connected to the components 130 in a wired or wireless manner. Thus, information can be exchanged between the process control system 110 and the components 130. For example, the process control system 110 may receive from a component 130 information relating to the operating state thereof (e.g. a value of an attribute of component 130); the process control system 110 may also send a control command to the component 130 on the basis of the operating state thereof, so as to control the operation of the production process, etc.
Furthermore, the process control system 110 may also be connected to the display 120 in a wired or wireless manner. Thus, the process control system 110 may present to the user various types of information associated with the production process by means of the display 120. For example, the process control system 110 may display at least one page to the user on the display 120, so as to provide various types of information. One page may be used to display an operating state of at least one sub-process in the production process, may be used to display a diagram of logic connections between components, and may be used to display various measurement parameters in the production process, etc.
However, as stated above, when a fault occurs in the production process, the user is often unable to rapidly locate information relating to the fault, with the result that the efficiency of fault analysis is low. Thus, an embodiment of the present invention provides an effective solution. The solution in an embodiment of the present invention is described in detail below with reference to a particular embodiment.

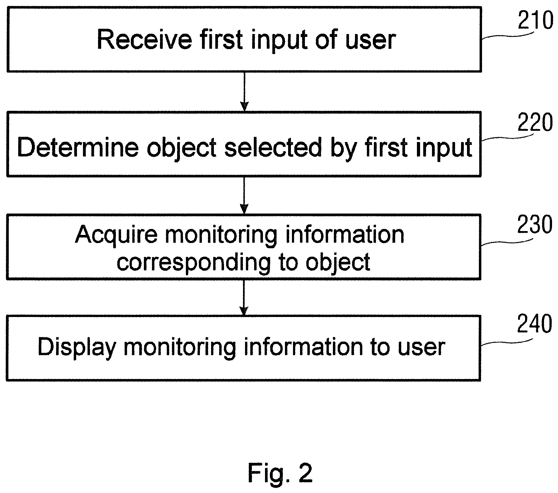

Fig. 2 is a flow chart of a method for displaying monitoring information according to an embodiment of the present invention. For example, the method of fig. 2 may be realized by the process control system 110 shown in fig. 1 in combination with the display 120.
As shown in fig. 2, in step 210, a first input of the user on a first page of a first display area is received. The first page is used to display an operating state of at least one sub-process associated with a fault in a production process.
In step 220, an object selected by the first input on the first page is determined.
In step 230, pre-stored monitoring information corresponding to the selected object is acquired.
The monitoring information may be used by the user to analyse a fault which has occurred in the production process. Specifically, the monitoring information may be used to indicate an operating state of the selected object in the production process.
In step 240, monitoring information is displayed to the user on a second display area.
Clearly, in an embodiment of the present invention, by determining an object selected by a user input on a page associated with a fault, in order to display monitoring information associated with the object for the user, with no need for the user to view a large number of pages according to personal experience in order to acquire such information, the fault analysis time can be reduced, and the efficiency of fault analysis can be increased.

Embodiments of the present invention are described in detail below with reference to specific examples. It should be understood that these examples are merely intended to help those skilled in the art to better understand embodiments of the present invention, not to limit the scope of embodiments of the present invention.

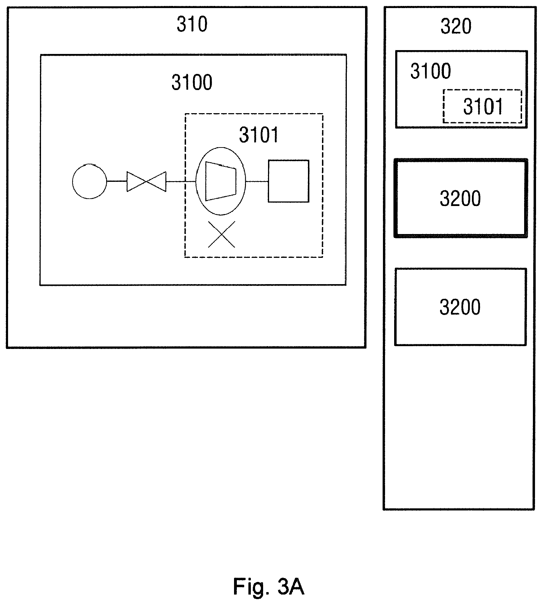

First of all, the examples in figs. 3A - 3D are described. Figs. 3A - 3D together show an example of display layout according to one embodiment of the present invention.

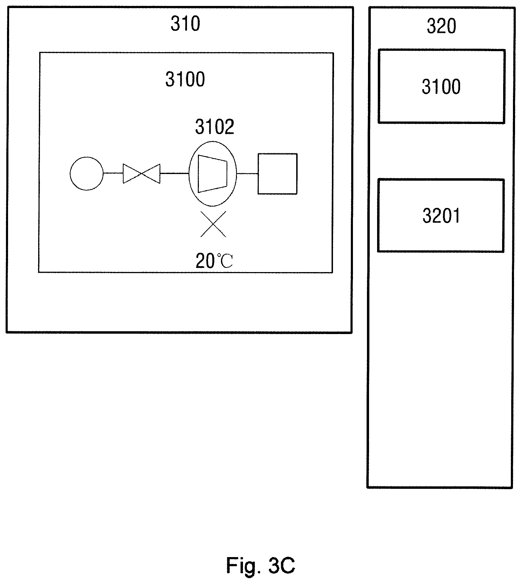

In figs. 3A - 3D, to facilitate explanation, suppose that a first display area 310 and a second display area 320 are arranged on the left and right, and suppose that a longitudinal display method is adopted for the second display area 320. However, an embodiment of the present invention may adopt any suitable layout according to actual needs, and is not limited to the layout shown in figs. 3A - 3D. For example, the first display area 310 and second display area 320 could be arranged at the top and bottom, and a transverse display method could be adopted for the second display area 320. In the embodiment shown in figs. 3A - 3D, suppose that a fault occurs in a production process; then a first page 3100 could be displayed on the first display area 310. The first page 3100 may be used to display an operating state of at least one sub-process associated with the fault in the production process. To facilitate understanding in a visually direct way, various components displayed on the first page are shown simply and schematically by way of example in figs. 3A and 3C - 3D, and the symbol "X" is used to indicate that a fault has occurred on the first page 3100. It should be understood that the components shown on the first page here are merely intended to help those skilled in the art to understand embodiments of the present invention easily, and do not limit the meaning of the first page.
After discovering a fault alert, the user might wish to view further information relating to the fault, in order to determine the cause of the fault; in this case, the user may provide a first input on the first page. As stated above, corresponding monitoring information may be provided to the user, according to an object selected by the first input of the user on the first page. For example, the selected object may comprise a first region on the first page, the current value of an attribute of a component displayed on the first page, or a component displayed on the first page. Furthermore, it will be understood that the first input may be realized by any method capable of realizing the selection function. For example, the first input may comprise: selecting an object on the first page on the first display area, then dragging the selected object from the first display area to the second display area. Such an input method is easy for a user to understand and operate, and can improve the user experience.

These three types of object are described separately by way of examples below.
First of all, the case where the selected object comprises a first region on the first page will be described.

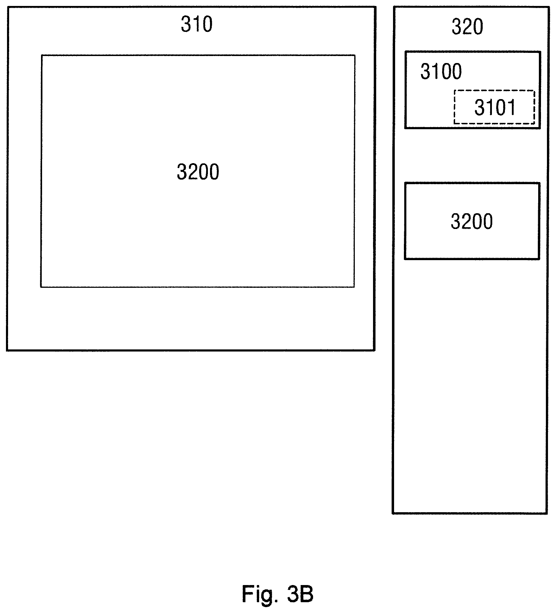

In fig. 3A, suppose that the first input selects a first region 3101 on the first page 3100.
After the first input of the user is received, it can be determined that the first input has selected the first region, for example: the user uses a mouse to frame the first region on the first page 3100 and drags the framed first region to the second display area, to complete the first input, and it can then be determined that the first input has selected the first region. Then at least one second page 3200 can be acquired. For simplicity of description, suppose that the number of second pages in fig. 3A is two. The second page may be a pre-defined page associated with the fault, and is associated with at least one sub-process designated by the first region 3101.
Next, as shown in fig. 3A, a thumbnail of at least one second page 3200 may be displayed to the user on the second display area 320.
Clearly, in this embodiment, based on a region selected by the user input on a page on which a fault has occurred, a page associated with the fault of the region can be rapidly provided and displayed, with no need for the user to search for these pages according to personal experience, so the efficiency with which the user can analyse faults can be increased. Furthermore, the thumbnail of each second page may be associated with a link, which can direct to the second page. Thus, if the user wishes to view the second page in detail, the user can provide a second input on the second display area 320.
Specifically, after the second input of the user on the second display area 320 has been received, it can be determined that the second input has selected one of at least one second page 3200. Correspondingly, the second page selected by the second input may be displayed on the first display area 310.
For example, as shown in fig. 3A, suppose that the user selects a first second page (suppose this is the second page 3200 with the emboldened border). In this case, as shown in fig. 3B, the second page may be displayed on the first display area 310.
It should be understood that the abovementioned second input may be realized by any method capable of fulfilling the abovementioned selection function; embodiments of the present invention are not restricted in this respect.
For example, the second input may comprise: selecting one of at least one second page 3200 on the second display area 320, then dragging the selected second page from the second display area 320 to the first display area 310.

Clearly, such an input method is easy for a user to understand and operate, and can improve the user experience.

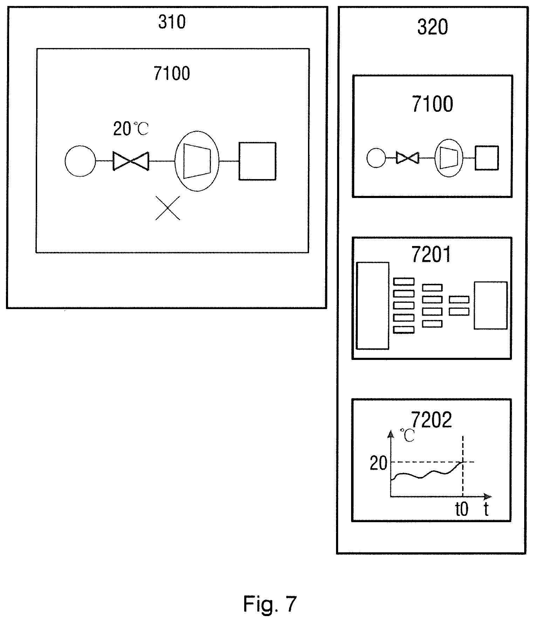

The case where the selected object comprises the current value of an attribute of a component will be described below.
In fig. 3C, suppose that the first input selects the current value of an attribute of a component 3102 on the first page 3100. To facilitate understanding, further suppose that the attribute of the component 3102 is temperature, the current value thereof is 20°C, and suppose that the current temperature value 20°C of the component 3102 is displayed below the component 3102.
After the first input of the user has been received, it can be determined that the first input has selected the current value of an attribute of the component 3102 on the first page 3100. In this example, the first input selects the temperature value 20°C of the component 3102. To facilitate understanding of this embodiment in a visually direct way, in the example of fig. 3C, "20°C" is emboldened to indicate that it has been selected by the first input.
A pre-stored graph of variation of the value of the attribute of component 3102 within a preset time period preceding the current moment can be acquired. The graph of variation 3201 can then be displayed on the second display area 320. In the example of fig. 3C, the graph of variation 3201 may be a graph of variation of the temperature value of component 3201 within a preset time period preceding the current moment t0. For instance, an example of the graph of variation 3201 could be the graph of variation 7202 shown in fig. 7.
Clearly, in this embodiment, the user selects the current value of a particular attribute of a particular component on a page associated with a fault by means of an input, and can thereby rapidly view a graph of variation of values of that attribute within a particular time period. In this way, the process of the user acquiring such monitoring information can be greatly simplified, and hence the efficiency of fault analysis can be improved.

The case where the selected object comprises a component on the first page will be described below.

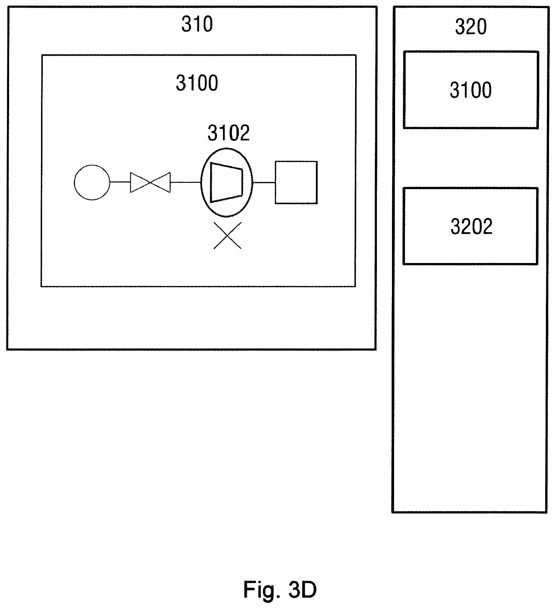

In fig. 3D, suppose that the first input selects a component 3102 displayed on the first page 3100.

After the first input of the user has been received, it can be determined that the first input has selected the component 3102 on the first page 3100. To facilitate understanding of this embodiment in a visually direct way, in the example of fig. 3D, the component 3102 is emboldened to indicate that it has been selected by the first input.
A pre-stored logic diagram of the component 3102 can then be acquired, and the logic diagram 3202 of the component 3102 can then be displayed on the second display area 320. For instance, an example of the logic diagram 3202 could be the logic diagram 7201 shown in fig. 7.
It will be understood that the logic diagram may refer to a logic relationship connections among components, as well as internal logic close-open relationships of the components themselves. By analysis of the logic diagram, the user can find internal inter-component associations, and can also directly locate the fault problem and perform corresponding close-open switching operations.
It will also be understood that all components involved in the production process will have corresponding logic diagrams. Thus, the abovementioned selected component may be any component with a logic diagram in the production process. For instance, the component could be a valve. Embodiments of the present invention are not restricted in this respect. Clearly, in this embodiment, the user selects a component on a page associated with a fault by means of an input, and can thereby rapidly view a logic diagram of the component, with no need to search for such information according to personal experience, hence the efficiency with which the user can analyse faults can be improved.

Furthermore, as shown in figs. 3A - 3D mentioned above, a thumbnail of the first page 3100 may also be displayed on the second display area 320. Furthermore, when the selected object comprises the first region 3101 on the first page 3100, the first region 3101 may also be marked on the thumbnail of the first page 3100, for example, as shown in figs. 3A - 3B. Such a manner of display makes it easy for the user to view, in a visually direct way, which page the currently displayed monitoring information is associated with, or further, which region on the page the currently displayed monitoring information is associated with, hence the efficiency of fault analysis can be further improved.

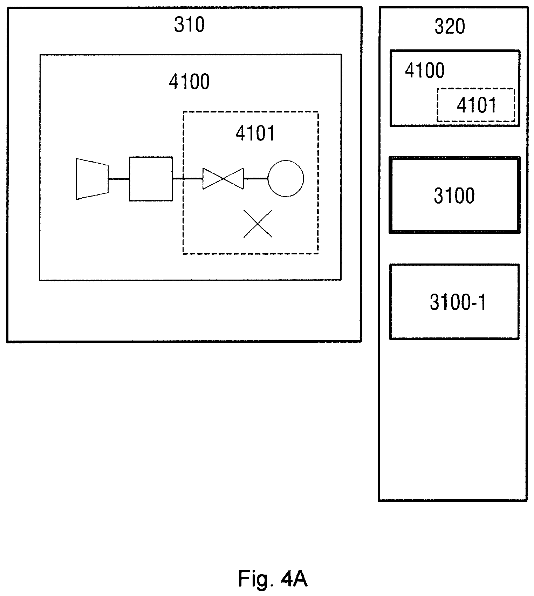

It will be understood that when a fault occurs in the production process, the first page may be selected by the process control system according to the fault, and further displayed on the first display area. In another embodiment, the first page may be selected for presentation by the user after preliminary fault determination. Such a case is described further below with reference to an example in fig. 4A.
Figs. 4A - 4C together show an example of display layout according to another embodiment of the present invention.
Similarly to figs. 3A - 3D, in figs. 4A - 4C, to facilitate explanation, suppose that a first display area 310 and a second display area 320 are arranged on the left and right, and suppose that a longitudinal display method is adopted for the second display area 320.
In the embodiment of fig. 4A, suppose that a fault occurs in a production process; then a third page 4100 could be displayed on the first display area 310. The third page 4100 may be used to display an operating state of at least one sub-process associated with the fault in the production process. To facilitate understanding in a visually direct way, in fig. 4A, components displayed on the third page 4100 are shown simply and schematically by way of example, and the symbol "X" is used to indicate that a fault has occurred on the third page 4100.
After discovering a fault alert, the user might wish to further view monitoring information associated with the fault, in order to determine the cause of the fault; in this case the user may provide a third input on the first display area 310. After the third input has been received, it can be determined that the third input has selected a second region 4101 on the third page 4100.
At least one pre-stored fourth page can then be acquired according to the third input. The fourth page may be a pre-defined page associated with the fault, and is associated with at least one sub-process of the production process designated by the second region 4101. Furthermore, the at least one fourth page may comprise a first page.
In the example of fig. 4A, to simplify description, suppose that the at least one fourth page comprises a first page 3100 and a page 3100-1.
A thumbnail of the at least one fourth page can then be displayed on the second display area 320. For instance, in the example of fig. 4A, thumbnails of the first page 3100 and the page 3100-1 are displayed on the second display area 320.
At this time, the user might with to further view specific content of the first page 3100, and can therefore provide a fourth input on the second display area 320.

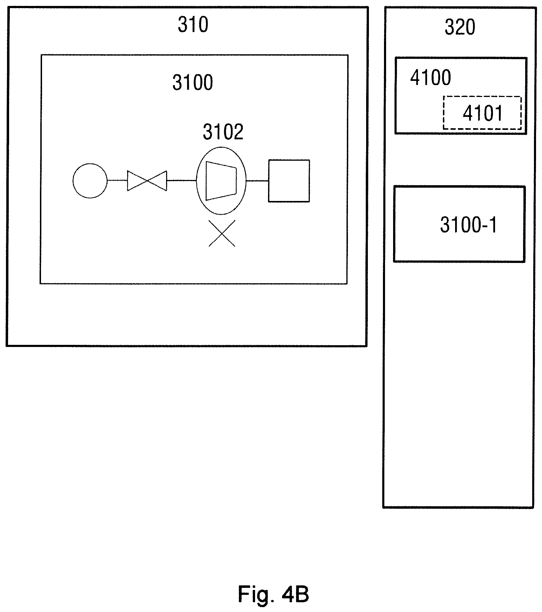

Specifically, after the fourth input of the user is received, it can be determined that the fourth input has selected the first page 3100 on the second display area 320. To facilitate understanding in a visually direct way, in fig. 4A, a border of the first page 3100 has been emboldened in the second display area to indicate that the first page 3100 has been selected. Next, based on the fourth input, the first page 3100 is displayed on the first display area 310, e.g. as shown in fig. 4B.
It will be understood that the abovementioned third input and fourth input may both be executed in any manner capable of realizing the abovementioned selection function. For instance, the third input may comprise: selecting the second region 4101 on the third page on the first display area 310, and then dragging the selected second region 4101 from the first display area 310 to the second display area 320. The fourth input may comprise: selecting a first page 3100 on the second display area 320, and then dragging the selected first page 3100 from the second display area 320 to the first display area 310. Such an input method is easy for a user to understand and operate, and can improve the user experience.

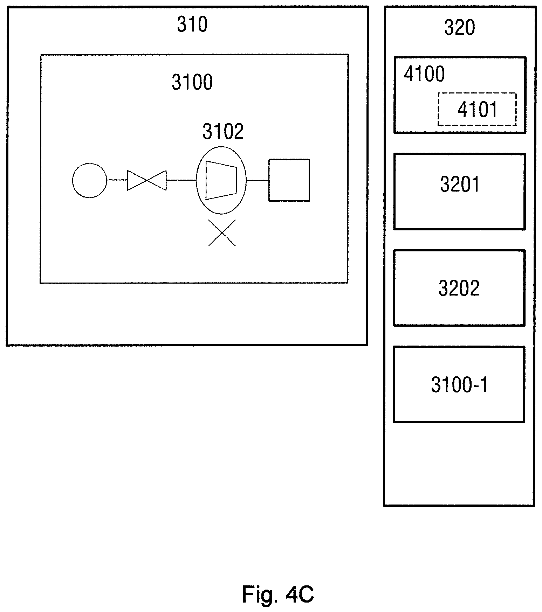

Furthermore, similarly to fig. 3A, a thumbnail of the third page 4100 may also be displayed on the second display area 320, and the second region 4101 may also be marked on the thumbnail of the third page 4100, e.g. as shown in figs. 4A and 4B. This makes it easy for the user to understand, in a visually direct way, which page or which region of which page the currently displayed monitoring information is associated with, so as to further improve the efficiency of fault analysis.
In addition, as stated above, if the user wishes to further view monitoring information associated with a fault, the user may provide a first input on the first page 3100 of the first display area 310. Based on an object selected by the first input on the first page 3100, monitoring information associated with the object can be displayed to the user on the second display area 320.
At this time, the thumbnail of the third page, monitoring information, and the remaining page(s) of the at least one fourth page (other than the first page) may be displayed in the second display area 320 in a manner of successive arrangement. Such a manner of display makes it easy for the user to understand and view, in a visually direct way, these items of information associated with the fault which were previously displayed, and hence can make it convenient for the user to perform comprehensive analysis of these items of information, to improve the efficiency of fault analysis. For instance, in the case where a longitudinal display method is adopted for the second display area, the thumbnail of the third page, monitoring information, and the remaining page(s) of the at least one fourth page (other than the first page) may be arranged on the second display area in order from top to bottom. In the case where a transverse display method is adopted for the second display area, the thumbnail of the third page, monitoring information, and the remaining page(s) of the at least one fourth page (other than the first page) may be arranged on the second display area in order from left to right.
To give those skilled in the art a better understanding of these embodiments, an explanation is given below with reference to the example of fig. 4C.
Suppose that the first input selects the current value of an attribute of component 3102 on the first page 3100; then a graph of variation 3201 of values of the attribute within a preset time period preceding the current moment may be displayed on the second display area 320. In such a case, the third page 4100, the graph of variation 3201, and the other fourth page 3100-1, will be displayed in the second display area 320 so as to be arranged in order from top to bottom.
If, at a subsequent time, the first input again selects component 3102 on the first page 3100, then a logic diagram 3202 of the component will be displayed on the second display area 320. In such a case, as shown in fig. 4C, the third page 4100, the graph of variation 3201, the logic diagram 3202 and the other fourth page 3100-1, will be displayed in the second display area 320 so as to be arranged in order from top to bottom.

It will be understood that in the various embodiments above, the first display area 310 and second display area 320 may be located on the same user interface, or located on different user interfaces. Embodiments of the present invention are not restricted in this respect. Thus, a flexible manner of display can be provided according to user needs.
In addition, in the various embodiments above, the first display area 310 may be larger than the second display area 320. The first display area 310 may also have a higher screen resolution that the second display area 320. This can make it easy for the user to clearly view associated monitoring information in the first display area 310, in order to perform fault analysis.

Furthermore, after the process shown in figs. 3A - 3D above, or after the process in figs. 4A - 4C above, if another input of the user in the first display area 310 is received, wherein the input selects a page that is different from all previous pages, then the page selected by the input may be displayed in the first display area. At this time, the user may be asked by means of a dialog box whether the information currently displayed on the second display area 320 is to be cleared. If a user input received indicates that the information currently displayed on the second display area 320 is to be cleared, then the information currently displayed on the second display area 320 may be cleared. If a user input received indicates that these items of information are not to be cleared, then information that is already displayed may be retained on the second display area 320.

To enable further understanding of embodiments of the present invention, a method flow chart associated with the embodiments of figs. 3A - 3B and figs. 4A - 4B above will be given below.

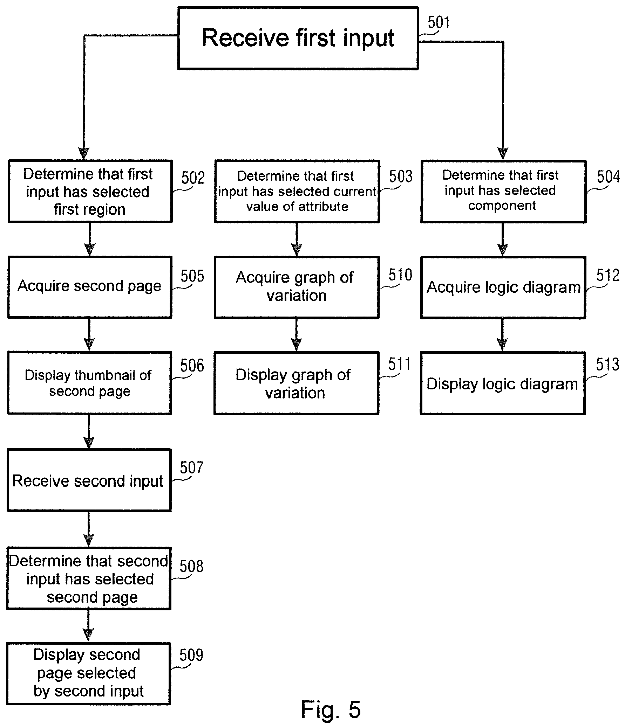

Fig. 5 is a flow chart of a method for displaying monitoring information according to an embodiment of the present invention. The process in fig. 5 corresponds to the embodiment shown in figs. 3A - 3B above.
As shown in fig. 5, in step 501, a first input of the user on a first page of a first display area is received. The first page is used to display an operating state of at least one sub-process associated with a fault in a production process.
As stated above, an object selected by the first input on the first page may comprise a region, the current value of an attribute of a component, or a component. In fig. 5, steps 502 and 505 - 509 describe a processing process in which the selected object comprises a region, steps 503 and 510 - 511 describe a processing process in which the selected object comprises the current value of an attribute of a component, and steps 504 and 512 - 513 describe a processing process in which the selected object comprises a component. These three cases are described separately below.
First of all, processing steps 502 and 505 - 509 in the case where the selected object comprises a region will be described.
In step 502, it is determined that the first input has selected a first region on a first page.
In step 505, at least one second page is acquired. The at least one second page may be a pre-defined page which is associated with the abovementioned fault and which is associated with at least one sub-process in a production process designated by the first region.

In step 506, a thumbnail of the at least one second page is displayed to the user on a second display area.
In one embodiment, the thumbnail of each second page may be associated with a link, which points to the second page.
In step 507, a second input of the user on the second display area is received.
In step 508, one of the at least one second page selected by the second input on the second display area is determined.
In step 509, the second page selected by the second input is displayed on the first display area.

Processing steps 503 and 510 - 511 in the case where the selected object comprises the current value of an attribute of a component will be described below.
In step 503, it is determined that the first input has selected the current value of an attribute of a component displayed on the first page.
In step 510, a graph of variation of values of the attribute of the component within a preset time period preceding the current moment is acquired. The graph of variation may be stored in advance.
In step 511, the abovementioned graph of variation is displayed on the second display area.

Processing steps 504 and 512 - 513 in the case where the selected object comprises a component will be described below.
In step 504, it is determined that the first input has selected a component displayed on the first page.
In step 512, a pre-stored logic diagram of the component is acquired.
In step 513, the logic diagram of the component is displayed to the user on the second display area.

Clearly, through the embodiment above, corresponding monitoring information is provided according to an object selected by a user input on a page associated with a fault, with no need for the user to search for these items of information according to personal experience, hence the efficiency which which the user can analyse faults can be improved.

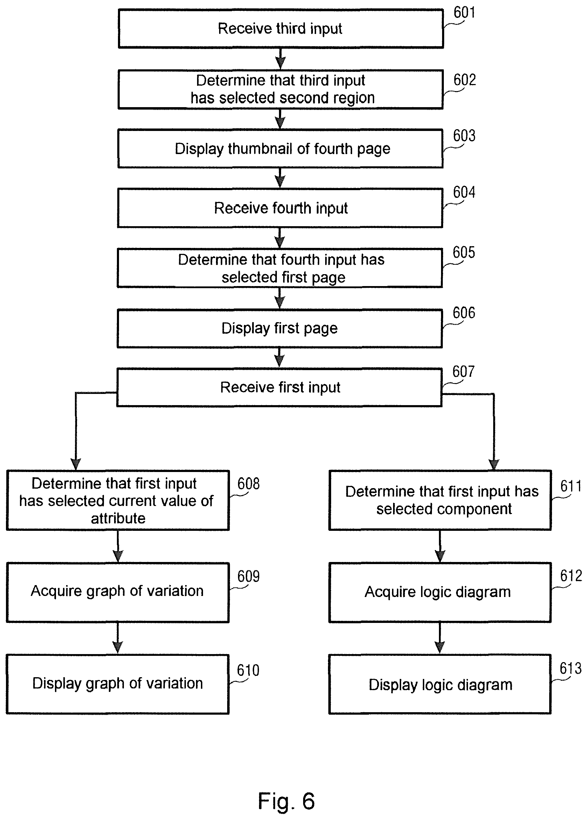

Fig. 6 is a flow chart of a method for displaying monitoring information according to another embodiment of the present invention. The process in fig. 6 may correspond to the embodiment shown in figs. 4A - 4C.

As shown in fig. 6, in step 601, a third input of the user on a third page of a first display area is received.
The third page may be used to display an operating state of at least one sub-process associated with a fault in a production process.
In step 602, a second region selected by the third input on the third page is determined.
In step 603, a thumbnail of at least one fourth page is displayed to the user on a second display area.
The at least one fourth page may be a pre-defined page which is associated with a fault and which is associated with at least one sub-process in a production process designated by the second region. Furthermore, the at least one fourth page may comprise a first page.
In step 604, a fourth input of the user on the second display area is received.
In step 605, it is determined that the fourth input has selected the first page on the second display area.
In step 606, the first page is displayed to the user on the first display area.
In step 607, a first input of the user on the first page is received. Following step 607, steps 608 - 610 are similar to the process of steps 503 and 510 - 511 described in fig. 5, and steps 611 - 613 are similar to steps 504 and 512 - 513 described in fig. 5. In other words, steps 608 - 610 describe a processing process in which the object selected by the first input on the first page comprises the current value of an attribute of a component, and steps 611 - 613 describe a processing process in which the object selected by the first input on the first page comprises a component. A detailed description is not repeated here.
Clearly, in this embodiment, first of all, on the basis of a region selected by a user input on a page associated with a fault, a thumbnail of at least one page associated with the region is provided; then, on the basis of a page selected by a user input in a thumbnail of at least one page, said page is displayed; then, on the basis of an object selected by a user input on said page, corresponding monitoring information is further provided. Thus, the user can quickly acquire detailed information associated with a fault, hence the efficiency with which the user can analyse faults can be improved.

To enable those skilled in the art to better understand embodiments of the present invention, an example of monitoring information display layout according to an embodiment of the present invention is explained below with reference to the example of fig. 7. For instance, the example of fig. 7 could relate to a power station scenario.
As shown in fig. 7, suppose that a fault occurs in a power generating process; then a page 7100 may be displayed in a first display area 310. The page 7100 may display an operating state of at least one sub-process associated with the fault in the power generating process. For instance, the page 7100 may display an operating state associated with a steam turbine.
At this time, the user might wish to locate the cause of the fault, e.g. the user might wish to further view information relating to a valve in order to determined the cause of the fault. In this case, the user may provide an input on the page 7100. For example, the user may select a valve on page 7100 by means of an input, and drag the valve to a second display area 320. To facilitate understanding, in fig. 7, a valve symbol is emboldened to indicate that the user input has selected the valve.
At this time, a pre-stored logic diagram of the valve may be acquired, and the logic diagram may be displayed on the second display area 320. For instance, in fig. 7, the logic diagram of the valve is represented by a box 7201.
The user might then wish to further view detailed information about the temperature of the valve. In this case, the user may provide another input on page 7100. For instance, the user may select, by means of an input, the current value "20°C" of the temperature of the valve on page 7100, and then drag this value to the second display area 320. At this time, a pre-stored graph of variation of valve temperature within a preset time period preceding the current moment t0 may be acquired, and this graph of variation may be displayed on the second display area 320. For instance, in fig. 7, the graph of variation of valve temperature within a preset time period preceding the current moment is represented by a box 7202.
Clearly, the user selects, by means of a simple input, a corresponding object on a page associated with a fault, and can thereby quickly view monitoring information associated with the object, hence the fault analysis time can be shortened, and the efficiency of fault analysis can be improved.

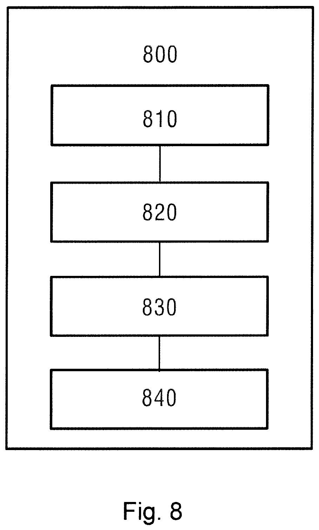

Fig. 8 is a schematic diagram of an apparatus for displaying monitoring information according to an embodiment of the present invention. The apparatus 800 shown in fig. 8 may be implemented using software, hardware (e.g. an integrated circuit or digital signal processor (DSP) etc.) or a combination of software and hardware. For instance, the apparatus 800 of fig. 8 may be located in the process control system 110 shown in fig. 1. As shown in fig. 8, the apparatus 800 may comprise a receiving module 810, a determining module 820, an acquiring module 830 and a display module 840. The receiving module 810 receives a first input of the user on a first page of a first display area. The first page is used to display an operating state of at least one sub-process associated with a fault in a production process. The determining module 820 determines an object selected by the first input on the first page. The acquiring module 830 acquires pre-stored monitoring information corresponding to the object. The monitoring information is used to indicate an operating state of the object in a production process. The display module 840 displays monitoring information to the user on a second display area.
Clearly, in this embodiment, by determining an object selected by a user input on a page associated with a fault, in order to display monitoring information associated with the object for the user, with no need for the user to view a large number of pages according to personal experience in order to acquire such information, the fault analysis time can be reduced, and the efficiency of fault analysis can be increased.
In one embodiment, the object determined by the determining module 820 comprises a first region on the first page. The display module 840, when displaying monitoring information to the user on the second display area, is specifically used for: displaying a thumbnail of at least one second page to the user on the second display area; wherein the at least one second page is a pre-defined page which is associated with a fault and which is associated with at least one sub-process in a production process designated by the first region.
In another embodiment, the thumbnail of each second page displayed by the display module 840 is associated with a link, which points to the second page.
The receiving module 810 may be used for receiving a second input of the user on the second display area, after the thumbnail of at least one second page is displayed to the user on the second display area of the display module 840; the determining module 820 may determine one of the at least one second page selected by the second input on the second display area; the display module 840 may display on the first display area the second page selected by the second input.

In another embodiment, the receiving module 810, when receiving the second input, is specifically used for receiving the following operations performed by the user: selecting one of the at least one second page on the second display area; dragging the selected second page from the second display area to the first display area.
In another embodiment, the object determined by the determining module 820 comprises the current value of an attribute of a component displayed on the first page;
the display module 840, when displaying monitoring information to the user on the second display area, is specifically used for: displaying to the user on the second display area a graph of variation of values of the attribute of the component within a preset time period preceding the current moment.
In another embodiment, the object determined by the determining module 820 comprises a component displayed on the first page;
the display module 840, when displaying monitoring information to the user on the second display area, is specifically used for: displaying a logic diagram of the component to the user on the second display area.
In another embodiment, the receiving module 810 may be used for receiving a third input of the user on a third page of the first display area, before receiving the first input. The third page is used to display an operating state of at least one sub-process associated with a fault in a production process. The determining module 820 may determine a second region selected by the third input on the third page. The display module 840 may display a thumbnail of at least one fourth page to the user on a second display area. The at least one fourth page is a pre-defined page which is associated with a fault and which is associated with at least one sub-process in a production process designated by the second region. The receiving module 810 may receive a fourth input of the user on the second display area. The determining module 820 may determine that the fourth input has selected the first page on the second display area. The display module 840 may display the first page on the first display area.
In another embodiment, the display module 840 may display a thumbnail of the third page on the second display area. The thumbnail of the third page, monitoring information, and a thumbnail of each of the at least one fourth page (other than the first page) are displayed in the second display area in a manner of successive arrangement.
In another embodiment, the second region determined by the determining module 820 is marked on the thumbnail of the third page.

In another embodiment, the receiving module 810, when receiving the third input, is specifically used for receiving the following operations performed by the user: selecting the second region on the third page selected on the first display area; dragging the selected second region from the first display area to the second display area.
The receiving module 810, when receiving the fourth input, is specifically used for receiving the following operations performed by the user: selecting the first page on the second display area; dragging the first page from the second display area to the first display area.
In another embodiment, the first display area and second display area used by the display module 840 are located on the same user interface, or located on different user interfaces.
In another embodiment, the receiving module 810, when receiving the first input, is specifically used for receiving the following operations performed by the user: selecting an object on the first page on the first display area; dragging the selected object from the first display area to the second display area.
In another embodiment, the first display area used by the display module 840 is larger than the second display area used by the display module 840; and/or the first display area used by the display module 840 has a higher screen resolution than the second display area used by the display module 840.
The implementation of the abovementioned process control system 110 may be referred to for other optional embodiments of the apparatus 800, wherein the receiving module 810 may be used for receiving user inputs, the determining module 820 may be used for determination and control, and the acquiring module 830 may be used for acquiring information such as monitoring information. The display module 840 may be used for displaying information such as monitoring information.

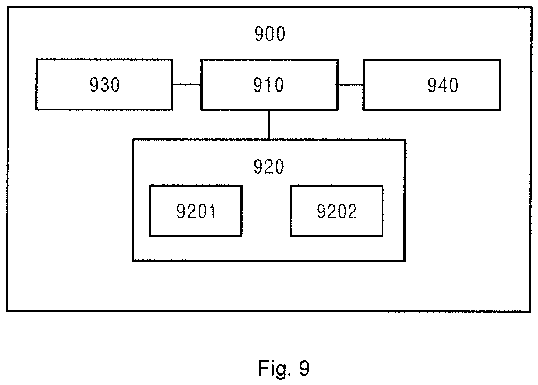

Reference is now made to fig. 9, which shows a schematic diagram of an apparatus for displaying monitoring information according to an embodiment of the present invention. The monitoring information is used for analysing a fault which has occurred in a production process.
As shown in fig. 9, the apparatus 900 may comprise at least one processor 910, at least one user interface 920, and a display 930. At least one user interface 920 and the display 930 may be coupled to at least one processor 910. For example, at least one processor 910, at least one user interface 920, and the display 930 may be connected by a bus.

At least one user interface 920 may receive a user input, and the display 930 may display associated information to the user. At least one processor 910 may, in combination with at least one user interface 920 and the display 930, perform the processes of the abovementioned method embodiments.
For instance, at least one processor 910 may receive a first input of the user on a first page of a first display area of the display 930 by means of at least one user interface 920. The first page is used to display an operating state of at least one sub-process associated with a fault in a production process. At least one processor 910 may determine an object selected by the first input on the first page. At least one processor 910 may acquire pre-stored monitoring information corresponding to the object. The monitoring information is used to indicate an operating state of the object in the production process. At least one processor 910 can then display the monitoring information to the user via a second display area of the display 930.
In addition, as shown in fig. 9, the apparatus 900 may also comprise a memory 940. The memory 940 may be coupled to at least one procesor 910. For instance, the memory 940 may be connected by a bus to at least one processor 910. The memory 940 may store executable instructions which, when executed by the processor 910, enable at least one processor 910 to execute the processes in the method embodiments above. In addition, the memory 940 may also be used for storing various types of information in embodiments of the present invention. For instance, the abovementioned monitoring information may be pre-stored in the memory 940.
In addition, as shown in fig. 9, the abovementioned at least one user interface 920 may comprise a touch screen 9201, a mouse keyboard 9202 or another input device known in the art, etc. For instance, the touch screen may be coupled to at least one processor 910 by means of a touch screen controller; the mouse keyboard may be coupled to at least one processor 910 by means of a mouse keyboard controller. In one embodiment, in the case where the user interface 920 comprises a touch screen, the touch screen may be a constituent part of the display 930.

An embodiment of the present invention also provides a computer-readable medium. The computer-readable medium may comprise code for causing a computer to execute the processes of the method embodiments above.

The present invention has been presented and explained in detail above by means of the accompanying drawings and preferred embodiments. However, the present invention is not limited to these disclosed embodiments. Other solutions derived therefrom by those skilled in the art also fall within the scope of protection of the present invention.

## Claims

1. A method for displaying monitoring information, the monitoring information being used to analyse a fault which has occurred in a production process, **characterized in that** the method comprises:
receiving a first input of a user on a first page (3100) of a first display area (310), wherein the first page (3100) is used to display an operating state of at least one sub-process associated with the fault in the production process;
determining an object selected by the first input on the first page (3100);
acquiring pre-stored monitoring information corresponding to the object, wherein the monitoring information is used to indicate an operating state of the object in the production process;
displaying the monitoring information to the user on a second display area (320).

2. The method as claimed in claim 1, **characterized in that** the object comprises a first region (3101) on the first page (3100);
the step of displaying the monitoring information to the user on the second display area (320) further comprises:
displaying a thumbnail of at least one second page (3200) to the user on the second display area (320), wherein the at least one second page (3200) is a pre-defined page which is associated with the fault and which is associated with at least one sub-process in the production process designated by the first region (3101).

3. The method as claimed in claim 2, **characterized in that** the thumbnail of each second page (3200) is associated with a link, which points to the second page (3200);
after displaying the thumbnail of at least one second page (3200) to the user on the second display area (320), the method further comprises:
receiving a second input of the user on the second display area (320);
determining one second page (3200) of the at least one second page (3200) selected by the second input on the second display area (320);
displaying on the first display area (310) the second page (3200) selected by the second input.

4. The method as claimed in claim 1, **characterized in that** the object comprises a current value of an attribute of a component (3102) displayed on the first page (3100);
the step of displaying the monitoring information to the user on the second display area (320) further comprises:
displaying to the user on the second display area (320) a graph of variation of values of the attribute of the component (3102) within a preset time period preceding a current moment.

5. The method as claimed in claim 1, **characterized in that** the object comprises a component (3102) displayed on the first page (3100);
the step of displaying the monitoring information to the user on the second display area (320) further comprises:
displaying a logic diagram (3202) of the component to the user on the second display area (320).

6. The method as claimed in claim 4 or 5, **characterized in that** before receiving the first input, the method further comprises:
receiving a third input of the user on a third page (4100) of the first display area (310), wherein the third page (4100) is used to display an operating state of at least one sub-process associated with the fault in the production process;
determining a second region (4101) selected by the third input on the third page (4100);
displaying a thumbnail of at least one fourth page (3100, 3100-1) to the user on the second display area (320), wherein the at least one fourth page (3100, 3100-1) is a pre-defined page which is associated with the fault and which is associated with at least one sub-process in the production process designated by the second region (4101), and the at least one fourth page (3100, 3100-1) comprises the first page (3100);
receiving a fourth input of the user on the second display area (320);
determining that the fourth input has selected the first page (3100) on the second display area (320);
displaying the first page (3100) on the first display area (310).

7. An apparatus for displaying monitoring information, the monitoring information being used to analyse a fault which has occurred in a production process, **characterized in that** the apparatus comprises:
a receiving module (810), for receiving a first input of a user on a first page (3100) of a first display area (310), wherein the first page (3100) is used to display an operating state of at least one sub-process associated with the fault in the production process;
a determining module (820), for determining an object selected by the first input on the first page (3100);
an acquiring module (830), for acquiring pre-stored monitoring information corresponding to the object, wherein the monitoring information is used to indicate an operating state of the object in the production process;
a display module (840), for displaying the monitoring information to the user on a second display area (320).

8. The apparatus as claimed in claim 7, **characterized in that** the object determined by the determining module (820) comprises a first region on the first page;
the display module (840), when displaying the monitoring information to the user on the second display area (320), is specifically used for:
displaying a thumbnail of at least one second page (3200) to the user on the second display area (320), wherein the at least one second page (3200) is a pre-defined page which is associated with the fault and which is associated with at least one sub-process in the production process designated by the first region (3101).

9. The apparatus as claimed in claim 8, **characterized in that** the thumbnail of each second page (3200) displayed by the display module (840) is associated with a link, which points to the second page (3200);
the receiving module (810) is further used for: after the thumbnail of at least one second page (3200) is displayed to the user on the second display area (320) of the display module (840), receiving a second input of the user on the second display area (320);
the determining module (820) is further used for: determining one second page (3200) of the at least one second page (3200) selected by the second input on the second display area (320);
the display module (840) is further used for: displaying on the first display area (310) the second page (3200) selected by the second input.

10. The apparatus as claimed in claim 7, **characterized in that** the object determined by the determining module (820) comprises a current value of an attribute of a component (3102) displayed on the first page (3100);
the display module (840), when displaying the monitoring information to the user on the second display area (320), is specifically used for:
displaying to the user on the second display area (320) a graph of variation of values of the attribute of the component (3102) within a preset time period preceding a current moment.

11. The apparatus as claimed in claim 7, **characterized in that** the object determined by the determining module (820) comprises a component (3102) displayed on the first page (3100);
the display module (840), when displaying the monitoring information to the user on the second display area (320), is specifically used for:
displaying a logic diagram (3202) of the component to the user on the second display area (320).

12. The apparatus as claimed in claim 10 or 11, **characterized in that** the receiving module (810) is further used for: before receiving the first input, receiving a third input of the user on a third page (4100) of the first display area (310), wherein the third page (4100) is used to display an operating state of at least one sub-process associated with the fault in the production process;
the determining module (820) is further used for: determining a second region (4101) selected by the third input on the third page (4100);
the display module (840) is further used for: displaying a thumbnail of at least one fourth page (3100, 3100-1) to the user on the second display area (320), wherein the at least one fourth page (3100, 3100-1) is a pre-defined page which is associated with the fault and which is associated with at least one sub-process in the production process designated by the second region (4101), and the at least one fourth page (3100, 3100-1) comprises the first page (3100);
the receiving module (810) is further used for: receiving a fourth input of the user on the second display area (320);
the determining module (820) is further used for: determining that the fourth input has selected the first page (3100) on the second display area (320);
the display module (840) is further used for: displaying the first page (3100) on the first display area (310).

13. An apparatus for displaying monitoring information, the monitoring information being used to analyse a fault which has occurred in a production process, **characterized in that** the apparatus comprises:
at least one processor (910);
at least one user interface (920) coupled to the at least one processor;
a display (930) coupled to the at least one processor;
wherein:
the at least one processor (910) is used for:
combining with the at least one user interface (920) and the display (930) to execute the method as claimed in any one of claims 1 to 6.

14. A computer-readable medium, comprising code for causing a computer to execute the method as claimed in any one of claims 1 - 6.
